# FASCICULE DE BREVET EUROPEEN

(11) **EP 0 820 376 B1**
(45) Date de publication et mention de la délivrance du brevet: **11.09.2002**
(21) Numéro de dépôt: 96912090.6
(22) Date de dépôt: 10.04.1996
(51) Int. Cl.: B29C 49/64

(54) **PROCEDE ET DISPOSITIF DE CHAUFFAGE SELECTIF D'UNE PREFORME DE RECIPIENT**
VERFAHREN UND VORRICHTUNG ZUM SELEKTIVEM HEIZEN EINER VORFORM EINES BEHÄLTERS
METHOD AND DEVICE FOR SELECTIVELY HEATING A CONTAINER PREFORM

(30) Priorité: 12.04.1995 FR 9504390
(43) Date de publication de la demande: 28.01.1998
(73) Titulaire: SIDEL Société anonyme, 76930 Octeville-sur-Mer (FR)
(72) Inventeur: EMMER, Gérard, F-76280 Saint-Jouin-Bruneval (FR); EVRARD, Alain, F-76610 Le Havre (FR)
(74) Mandataire: Gorree, Jean-Michel
(86) Numéro de dépôt international: FR9600538
(87) Numéro de publication internationale: WO96032243

(56) Documents cités:
- EP-A- 0 197 780
- EP-A- 0 240 037
- WO-A-92/15442
- GB-A- 2 095 611
- US-A- 4 923 395
- PATENT ABSTRACTS OF JAPAN vol. 013, no. 143 (M-811), 7 Avril 1989 & JP,A,63 307928 (HIROSHI UENO), 15 Décembre 1988,

## Description

La présente invention concerne des perfectionnements apportés au chauffage sélectif d'une préforme destinée à la fabrication d'un récipient, tel qu'une bouteille, en une matière thermoplastique, notamment en polyéthylène téréphtalate PET, polyéthylènenaphtalate PEN, alliages ou mélanges de tels matériaux, par au moins une étape ultérieure de soufflage ou d'étirage-soufflage de la préforme chaude, selon lequel on chauffe la préforme en dirigeant sur celle-ci un rayonnement de chauffage émis par au moins une lampe.

Au cours de l'opération de soufflage ou d'étirage-soufflage, certaines zones de la préforme subissent des allongements complexes de grande amplitude : c'est le cas de la zone située immédiatement sous le col et qui conduit à l'épaule du récipient définitif ; c'est le cas également de la zone de fond, quelle que soit la forme du fond du récipient définitif. Il est connu, pour faciliter l'étirage du matériau plastique dans ces zones, de ramollir localement le matériau de façon plus importante et donc de chauffer lesdites zones priviligiées à une température sensiblement plus élevée que le reste de la préforme, tout en évitant de provoquer la cristallisation du matériau constitutif de la préforme. Le problème peut en outre être compliqué par le fait que, immédiatement à côté d'une de ces zones à chauffer de façon privilégiée (par exemple la zone située immédiatement sous le col de la préforme et destinée à constituer l'épaule du récipient définitif), peut se trouver une zone de la préforme qui doit ne pas être chauffée ou être très peu chauffée pour qu'elle ne soit pas ramollie et ne subisse donc pas de déformation lors des étapes ultérieures de soufflage ou d'étirage-soufflage (par exemple parce que le matériau a déjà été traité ou sera traité ultérieurement), comme c'est le cas notamment pour le col de la préforme.

Il est connu actuellement d'effectuer le traitement thermique des zones devant être chauffées de façon privilégiée en soumettant lesdites zones à un chauffage de durée et/ou d'intensité plus élevées que celui du reste de la préforme. En outre on met en place des caches qui protègent les zones, telles que le col, qui doivent ne pas être chauffées de façon privilégiée.

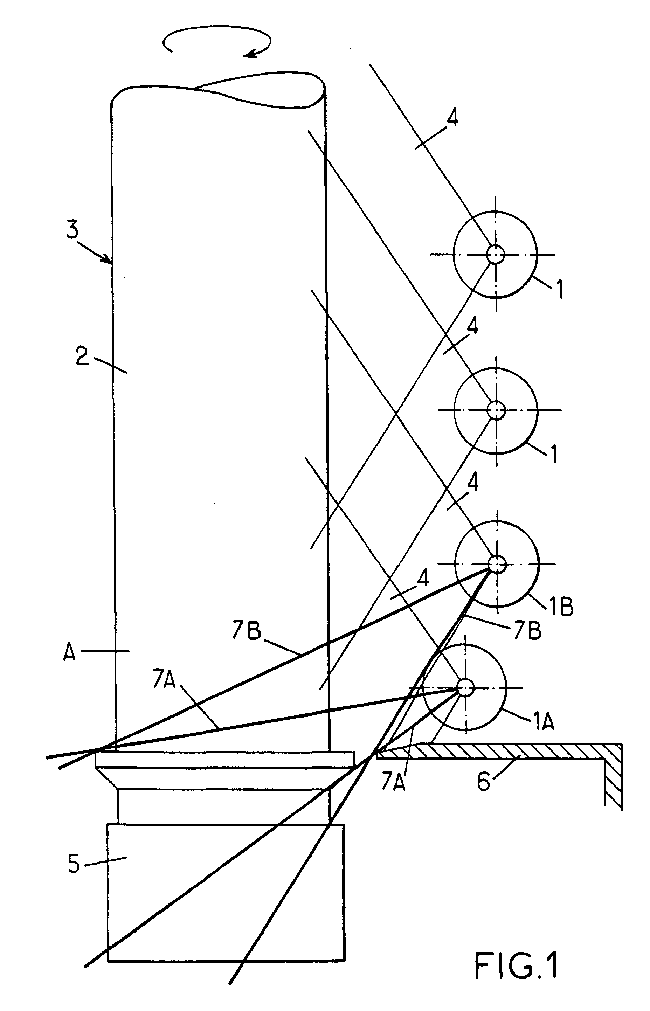

Pour fixer les idées, on a représenté de façon très schématisée, à la figure 1 des dessins annexés, un agencement classique de four-tunnel traitant les préformes au défilé, le déplacement linéaire des préformes étant accompagné d'une rotation de chaque préforme sur elle-même afin qu'elle soit exposée sensiblement uniformément au rayonnement de sources disposées unilatéralement. Comme représenté à la figure 1, les sources sont constituées par des lampes allongées ou tubes 1 de rayonnement infra-rouge disposées les unes au-dessus des autres pour chauffer l'ensemble du corps 2 d'une préforme 3. On a désigné par 4 la partie efficace du rayonnement de chaque lampe qui parvient sur la préforme, la puissance thermique reçue par la préforme par unité de surface étant, pour une puissance émise donnée, d'autant plus élevée que la distance à la lampe 1 est faible.

Le corps 2 de la préforme 3 possède une zone A (située immédiatement sous le col 5 de la préforme) qui, devant constituer l'épaule du récipient final et devant donc subir un étirage important, doit être sensiblement plus chauffée que le reste du corps. Pour homogénéiser les durées de chauffage de toutes les parties du corps de la préforme, on régule et/ou on adapte la distance de chaque lampe à la zone de la préforme qu'elle doit chauffer : ainsi, par exemple, la zone A est chauffée en réduisant la distance lampe-préforme, autrement dit en disposant la lampe 1A située en regard de la zone A plus près de la préforme, ce qui permet de chauffer cette zone en diminuant la puissance émise. On remarque que cette disposition fait que les zones avoisinant la zone A risquent, elles aussi, d'être chauffées de façon accrue si la puissance n'est pas convenablement régulée.

Par ailleurs, pour tenter de protéger le col 5 qui ne doit pas être chauffé, on dispose un cache 6 situé sensiblement au niveau de la partie de jonction entre le col 5 et le corps 2 de la préforme 3. Toutefois on constate qu'une fraction 7A (représentée en trait gras) du rayonnement 4 émis par la lampe 1A n'est pas occultée et parvient sur le col 5 et que de même une fraction 7B (représentée également en gras) du rayonnement 4 émis par la lampe 1B située au-dessus de la lampe 1A parvient également sur le col 5 (les lampes situées au-dessus de la lampe 1B sont trop éloignées et on peut considérer qu'elles n'influent pas sur le col 5). La protection du col 5 est donc très insuffisante et l'on est ainsi conduit à limiter la puissance de la lampe 1A, et donc à limiter le surcroît de chauffage de la zone A pour éviter de chauffer par trop le col 5.

Dans ces conditions, les agencements des fours actuels présentent l'inconvénient d'un chauffage qui est insuffisamment localisé sur les zones devant être chauffées de façon privilégiée telles la future épaule, le fond et des zones de striction éventuelles. En outre il est difficile, voire impossible de réaliser un chauffage plus intense d'une zone de très faible étendue, sauf à mettre en place un système de protection thermique locale qui compliquerait par trop l'agencement du four. Quant à la protection des zones devant ne pas être chauffées ou être peu chauffées, elle ne peut être obtenue que par la mise en place de caches en forme de plaques allongées et profilées dont l'efficacité n'est pas aussi totale qu'on pourrait le souhaiter.

Le document US-A-4 923 395 décrit un chauffage sélectif de préformes pour lequel chacune d'une pluralité de lampes tubulaires de chauffage est équipée d'un réflecteur qui l'entoure partiellement et qui est ouvert en direction de la zone à chauffer de la préforme. Toutefois ce document n'aborde pas le problème des interférences entre la zone chauffée préférentiellement et les zones avoisinantes, ni celui de la protection de façon simple d'une zone ne devant pas être chauffée située au voisinage d'une zone devant être chauffée préférentiellement.

Le document EP-A-0 240 037 décrit un dispositif de chauffage sélectif de certaines zones d'une partie de corps, dispositif qui comprend une enceinte renfermant plusieurs lampes en regard de fentes dans l'axe desquelles est disposée une lentille convergente. Cet agencement connu ne permet toutefois pas de différencier les effets de chauffage des lampes respectives qu'il renferme ; il s'agit d'un agencement encombrant qui ne pourrait pas être associé à chacune des lampes étagées en regard d'un corps de préforme ; enfin le problème des interférences entre la zone chauffée préférentiellement et les zones avoisinantes, et celui de la protection de façon simple d'une zone ne devant pas être chauffée située au voisinage d'une zone devant être chauffée préférentiellement ne sont pas évoqués.

L'invention a essentiellement pour but de proposer des moyens - procédé et dispositif - qui répondent aux souhaits de simplification du processus de chauffage sélectif des préformes et qui permettent, de façon simple, de chauffer de façon plus intense des zones privilégiées avec une possibilité de réglage de la position et de l'étendue desdites zones, avec une interférence moindre avec les zones avoisinantes, et par ailleurs avec une possibilité de protéger de façon simple une zone avoisinante devant ne pas être chauffée, les moyens mis en oeuvre conformément à l'invention évitant le recours à des masques additionnels et conduisant à un agencement plus simple, en égard à l'amélioration des fonctions assurées, et relativement moins coûteux des fours de chauffage des préformes, en particulier des fours-tunnels de chauffage au défilé.

A ces fins, selon un premier de ses aspects, l'invention propose un procédé de chauffage sélectif d'une préforme tel que mentionné au préambule qui, conformément à l'invention, se caractérise par les dispositions énoncées dans la partie caractéristique de la revendication 1.

Grâce à la concentration du rayonnement émis par la lampe, on accroît considérablement la proportion du rayonnement qui parvient sur la zone souhaitée de la préforme, alors qu'auparavant le rayonnement émis par la lampe était notablement diffus : une fraction sensible du rayonnement émis parvenait sur la préforme de part et d'autre de la zone souhaitée. Autrement dit, du seul fait de la focalisation du rayonnement émis par la lampe, il est possible d'obtenir un chauffage plus intense d'une zone privilégiée de la préforme alors même que la puissance électrique d'alimentation de la lampe demeure la même, voire est réduite.

Il en résulte également que les zones avoisinantes ne reçoivent plus ou reçoivent moins de rayonnement (rayonnement latéral ou rayonnement parasite) en provenance de ladite lampe. Il est donc plus facile de contrôler leur propre chauffage, voire leur absence de chauffage si ces zones avoisinantes ou l'une d'elles ne doivent pas être chauffées.

Enfin, il devient plus facile, sans modifier la puissance et/ou la position de la lampe, d'ajuster la position et l'étendue de la zone devant être chauffée de façon privilégiée ainsi que de régler la puissance de chauffage, tout simplement en ajustant la position, parallèlement à la préforme et/ou transversalement à celle-ci, des moyens focaliseurs, voire en modifiant le coefficient de focalisation de ceux-ci.

En général, dans les fours-tunnels de chauffage au défilé, le chauffage de la préforme est effectué à l'aide de plusieurs rangées superposées de lampes allongées à infra-rouges. En raison de la non directivité du rayonnement émis par chaque lampe, une zone donnée de la préforme peut être chauffée non seulement à titre principal par le rayonnement de la lampe située approximativement en regard de ladite zone, mais aussi à titre accessoire par le rayonnement latéral d'une lampe adjacente ; de la même manière, même si l'on focalise le rayonnement d'une lampe sur une zone de la préforme à chauffer de façon privilégiée et que l'on préserve ainsi une zone adjacente d'un rayonnement latéral en provenance de ladite lampe, ladite zone adjacente que l'on souhaite ne pas chauffer peut toutefois demeurer soumise à un rayonnement latéral en provenance d'une autre lampe située au-delà de la précédente. Dans ces conditions, le procédé de l'invention prévoit qu'en outre on atténue au moins fortement au moins la partie du rayonnement émis par une seconde lampe voisine de la lampe précitée en direction d'une zone à préserver du chauffage de façon privilégiée, qui est adjacente à la zone à chauffer de façon privilégiée et située, par rapport à celle-ci, à l'opposé de la susdite seconde lampe, ce grâce à quoi la zone à chauffer de façon privilégiée reçoit le rayonnement focalisé en provenance de la première lampe et une fraction du rayonnement parasite en provenance de la seconde lampe, tandis que ladite zone à préserver du chauffage de façon privilégiée ne reçoit ni le rayonnement de la première lampe qui a été focalisé sur la susdite zone à chauffer de façon privilégiée, ni le rayonnement latéral de la seconde lampe qui a été occulté ou alors seulement une portion fortement atténuée de ce dernier. Dans ce contexte, on prévoit d'occulter essentiellement la partie du rayonnement de la susdite seconde lampe émis approximativement en direction de ladite zone devant ne pas être chauffée de façon privilégiée (c'est-à-dire la partie du rayonnement effectuant le trajet le plus long avant de parvenir sur la préforme).

Il est alors intéressant de faire en sorte qu'on en atténue fortement ou qu'on occulte au moins la susdite partie du rayonnement parasite de la seconde lampe à l'aide des moyens avec lesquels on focalise le rayonnement de la première lampe : ce sont alors les moyens déjà en place qui forment écran, ce qui permet d'économiser du matériel.

Dans une application préférée du procédé de l'invention, on chauffe de façon privilégiée une partie du corps de la préforme qui est adjacente au col de la préforme et qui est destinée à constituer l'épaule du futur récipient et on protège du chauffage de façon privilégiée le col de la préforme qui est immédiatement adjacent à ladite partie à chauffer de façon privilégiée et en regard duquel n'est disposée aucune lampe. Il est également intéressant de chauffer, conformément au procédé de l'invention, le fond de la préforme ou d'éventuelles zones de striction.

Selon un second de ses aspects, l'invention propose également un dispositif de chauffage sélectif d'une préforme tel que mentionné au préambule, qui, étant agencé conformément à l'invention, se caractérise par les dispositions énoncées dans la partie caractéristique de la revendication 10.

De préférence alors, lorsque le dispositif comporte une seconde lampe de rayonnement et qu'il faut éviter de trop chauffer une seconde zone adjacente, les moyens focaliseurs sont en outre disposés de manière à au moins atténuer fortement la plus grande partie du rayonnement en provenance de ladite seconde lampe dirigée vers la seconde zone de la préforme immédiatement adjacente à la susdite zone à chauffer de façon privilégiée. Il est alors très intéressant que les moyens focaliseurs soient agencés pour occulter la plus grande partie dudit rayonnement de la seconde lampe dirigée vers ladite seconde zone à ne pas chauffer de façon priviligiée, ce qui permet de regrouper les fonctions de focalisation et d'occultation sur un même organe, et donc de faire une économie de matériel, de place et d'argent.

De façon souhaitable, on prévoit des premiers moyens de déplacement pour déplacer les moyens focaliseurs parallèlement à l'axe des préformes, ce grâce à quoi il est possible d'ajuster sur la préforme la zone d'incidence du rayonnement focalisé, et/ou des seconds moyens de déplacement pour déplacer les moyens focaliseurs afin de les rapprocher ou les éloigner de ladite lampe de rayonnement, ce grâce à quoi il est possible d'ajuster l'intensité du rayonnement focalisé sur la préforme.

De façon pratique, les moyens focaliseurs comprennent au moins un élément optique plan-convexe à convexité tournée vers la préforme, l'axe de l'élément plan-convexe étant approximativement aligné avec le centre de la lampe de rayonnement et le centre de la zone à chauffer de façon privilégiée sur la préforme. Dans un dispositif de chauffage agencé pour un chauffage des préformes au défilé et dans lequel chaque lampe de rayonnement est en forme de barreau, l'élément plan-convexe peut-être un barreau optique plan-convexe ayant sensiblement la même longueur que la lampe.

Dans un domaine d'application préféré du dispositif de l'invention, les moyens focaliseurs sont disposés de manière que soit chauffée de façon privilégiée une zone du corps de la préforme située immédiatement au voisinage du col de la préforme et que ne soit pas chauffé de façon privilégiée le col de la préforme ; pour une autre application, plus simple à mettre en oeuvre, les moyens focaliseurs sont disposés de manière que soit chauffé de façon privilégiée le fond de la préforme ou une zone de striction.

On notera également que la mise en oeuvre de l'invention permet d'éviter le recours à des préformes de formes complexes, par exemple avec des surépaisseurs en certaines zones du corps.

L'invention sera mieux comprise à la lecture de la description détaillée qui suit de certains modes de réalisation préférés donnés uniquement à titre d'exemples nullement limitatifs. Dans cette description, on se réfère aux dessins annexés sur lesquels :
- la figure 2 est un schéma illustrant de façon simplifiée le mode de chauffage conforme à l'invention, et
- la figure 3 est un schéma illustrant de façon simplifiée une variante préférée d'application du mode de chauffage de la figure 2.

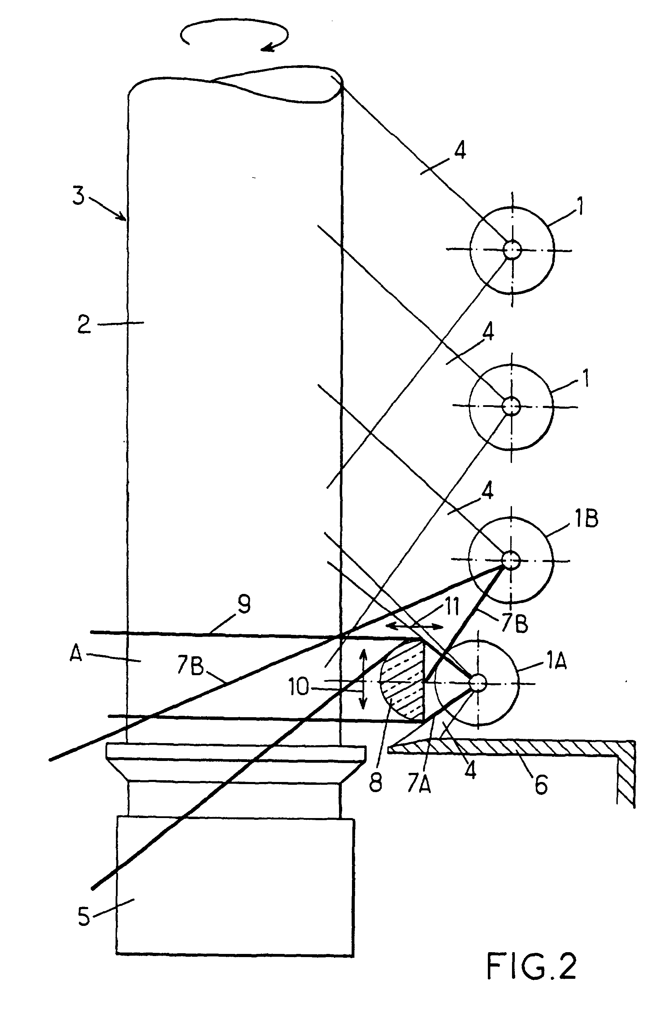

Sur la figure 2, on a représenté le même agencement que celui de la figure 1, en conservant les mêmes dispositions particulières qui, bien que devenant non obligatoires compte tenu des améliorations apportées par ailleurs par l'invention, continuent toutefois à présenter des avantages notables en combinaison avec les dispositions de l'invention dont question ci-après : en particulier la lampe inférieure 1A située en regard de la zone A du corps 2 de la préforme devant être chauffée préférentiellement est sensiblement décalée hors de l'alignement des autres lampes 1 et située plus près de la préforme on a conservé le cache 6 situé approximativement en regard de la séparation col 5/corps 2 de la préforme 3. En outre on a conservé sur la figure 2, les mêmes références numériques qu'à la figure 1 pour désigner les organes ou parties identiques.

Conformément à l'invention, on dispose, entre la lampe 1A et la zone A du corps 2 devant être chauffée de façon privilégiée, un élément optique 8 agencé pour focaliser au moins une partie du rayonnement émis par la lampe 1A. L'élément focaliseur 8 doit être réalisé en un matériau apte à supporter sans déformation et sans altération la température ambiante au sein du four et il peut présenter toute conformation propre à conférer la focalisation recherchée du rayonnement infra-rouge. Comme représenté à la figure 2, l'élément focaliseur 8 peut être un barreau en silice de section plan-convexe.

Les dimensions et les caractéristiques optiques de l'élément focaliseur 8 sont déterminés de manière qu'une majeure partie 7A du rayonnement infra-rouge 4 émis par la lampe 1A en direction de la préforme soit concentré en un faisceau 9 (dessiné en trait gras) à bords sensiblement parallèles comme représenté ou bien légèrement divergents ou encore sensiblement convergents.

Grâce à cet agencement, la concentration du faisceau 9 conduit à un chauffage plus important de la zone A du corps 2 de la préforme 3 qui est balayé par ledit faisceau concentré, alors que la puissance électrique d'alimentation de la lampe 1A peut n'être en rien modifiée, voire être atténuée. De plus la zone A chauffée ainsi de façon privilégiée peut être d'étendue restreinte et être chauffée de façon relativement homogène sur toute son étendue.

En outre, on peut envisager un ajustement simple de la position de la zone A chauffée de façon préférentielle sur le corps 2 en prévoyant des moyens de déplacement de l'élément focaliseur 8 parallèlement à l'axe de la préforme (double flèche 10). De la même manière des moyens de déplacement de l'élément focaliseur 8 transversalement à l'axe de la préforme (double flèche 11), pour le rapprocher ou l'éloigner de la lampe 1A, permettent d'intercepter une fraction plus ou moins importante du rayonnement 4 émis par la lampe 1A, et donc d'ajuster, dans certaines limites, la puissance de chauffage de la zone A.

On peut en outre constater, en comparant les faisceaux 7A schématisés respectivement sur les figures 1 et 2, que la partie inférieure du faisceau 7A de la figure 1 qui divergeait vers le col 5 de la préforme 3 est maintenant déviée vers la zone A du corps 2 du fait de la focalisation et ne parvient plus sur le col 5. En parallèle, le cache 6 arrête la partie divergente vers le bas et non focalisée du faisceau 4 issu de la lampe 1A. Au total, le col 5 de la préforme 3 ne reçoit plus de rayonnement en provenance de la lampe 1A.

Pour ce qui concerne le faisceau 7B en provenance de la lampe 1B, on peut en réduire notablement l'impact thermique sur le col 5 en prévoyant un cache approprié, disposé entre les lampes 1B et 1A, qui en occulterait au moins une fraction notable. Plutôt que de mettre en place un cache spécifique qui viendrait compliquer la structure du four, on peut profiter de la présence de l'élément focaliseur 8 associé à la lampe 1A qui, comme cela apparaît clairement sur la figure 2, se trouve placé sur le trajet d'une notable fraction du faisceau 7B issu de la lampe 1B en direction du col 5. Compte tenu de l'emplacement de l'élément focaliseur 8 et des inclinaisons relatives de ses faces et des rayonnements issus de la lampe 1B, la fraction inférieure dudit faisceau 7B est arrêtée par l'élément focaliseur 8 ou, pour une faible partie de cette fraction, est réfractée dans le faisceau 9. Ainsi seule la frange supérieure du faisceau 78 passe au-dessus de l'élément focaliseur 8 et vient se superposer obliquement au faisceau focalisé 9 sur la zone A.

Ainsi, grâce à l'élément focaliseur 8 mis en place conformément à l'invention, non seulement on accroît localement l'efficacité du chauffage de la zone A devant être chauffée de façon privilégiée, mais en outre on réduit de façon très notable le chauffage parasite du col 5, adjacent à ladite zone A et devant ne pas être chauffé de façon privilégiée. Ce double résultat est obtenu grâce à la présence d'un unique composant supplémentaire et la double fonction, de focalisation et d'écran, attribuée à celui-ci permet de traiter deux zones adjacentes de façons respectivement antagonistes (surchauffe pour l'une, absence de chauffage pour l'autre). En outre, ces résultats remarquables sont obtenus sans modification de la lampe de chauffage 1A et de son alimentation électrique, ou inversement, pour une puissance de chauffage donnée de la zone A, il est possible de réduire la puissance d'alimentation électrique de la lampe 1A.

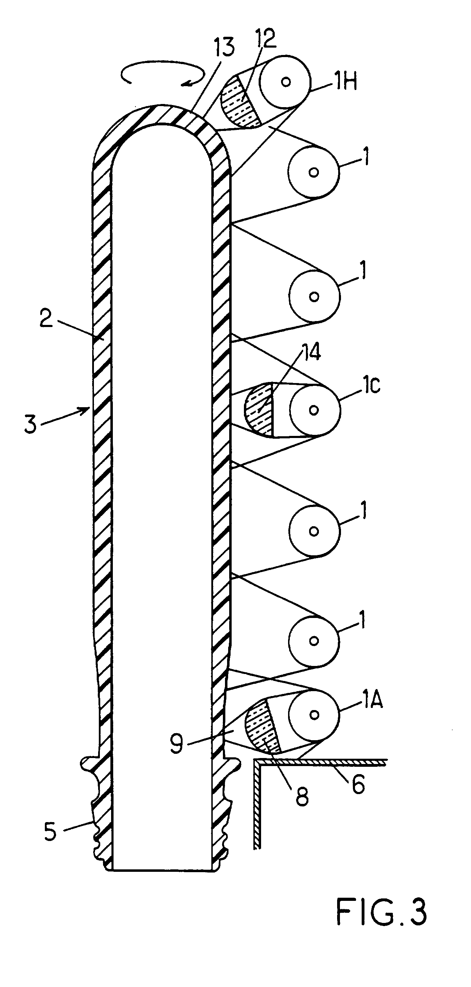

On notera toutefois que le rôle essentiel de l'élément additionnel 8 est de focaliser le rayonnement infra-rouge émis par la lampe adjacente sur une zone en regard du corps 2 de la préforme 3. De ce fait, cette fonction peut être assurée seule. La figure 3 montre ainsi un autre exemple d'application d'un élément focaliseur 12 dont la seule fonction est ici de focaliser le rayonnement émis par la lampe 1H supérieure sur la zone de fond 13 de la préforme 3. La figure 3 montre encore la mise en oeuvre d'un élément focaliseur 14 dont la fonction est de focaliser le rayonnement émis par une lampe 1C disposés en regard d'un emplacement souhaité (zone de striction) du corps de la préforme. Un tel agencement permet le chauffage ponctuel des zones appropriées du corps de manière à faciliter un étirage correct desdites zones (calotte sphérique du fond ou toute autre zone du corps) des préformes lors de l'opération de soufflage ou d'étirage-soufflage, tout en maîtrisant mieux, en ce qui concerne le fond, le diamètre d'une pastille plus froide au centre du fond, au niveau du point d'injection de la préforme, ou, en ce qui concerne toute autre zone du corps, l'étirage désiré.

## Revendications

1. Procédé de chauffage sélectif d'une préforme (3) destinée à la fabrication d'un récipient, tel qu'une bouteille, en une matière thermoplastique, par au moins une étape ultérieure de soufflage ou d'étirage-soufflage de la préforme chaude, selon lequel on chauffe la préforme en dirigeant sur celle-ci un rayonnement de chauffage émis par au moins une lampe,
**caractérisé en ce qu'**on focalise optiquement à l'aide de moyens focaliseurs optiques (8), sur une zone privilégiée (A) de la préforme (3), au moins la plus grande partie (7A) du rayonnement (4) émis, approximativement en direction de la préforme (3), par une lampe (1A) située sensiblement en regard de ladite zone privilégiée (A) de la préforme,
et **en ce que**, à l'aide desdits moyens focaliseurs optiques (8), on réfracte une portion de rayonnement issu d'une seconde lampe, voisine de la lampe précitée (1A), dans le faisceau issu desdits moyens focaliseurs optiques (8), et dirigés vers la zone à chauffer de façon privilégiée,
ce grâce à quoi ladite zone privilégiée (A) reçoit la plus grande partie (7A) du rayonnement (4) tandis que les zones avoisinant ladite zone privilégiée (A) ne reçoivent pas la fraction du rayonnement initialement émis par la lampe dans leur direction.

2. Procédé selon la revendication 1, **caractérisé en ce qu'**en outre on atténue au moins fortement au moins la partie (7B) du rayonnement émis par une seconde lampe (1B) voisine de la lampe précitée (1A) en direction d'une zone (5) à préserver du chauffage de façon privilégiée, qui est adjacente à la zone à chauffer de façon privilégiée (A) et située, par rapport à celle-ci, à l'opposé de la susdite seconde lampe (1B), ce grâce à quoi la zone à chauffer de façon privilégiée (A) reçoit le rayonnement focalisé en provenance de la première lampe (1A) et une fraction (7B) du rayonnement en provenance de la seconde lampe (1B),
tandis que ladite zone (5) à préserver du chauffage de façon privilégiée ne reçoit ni le rayonnement de la première lampe qui a été focalisé sur la susdite zone à chauffer de façon privilégiée, ni le rayonnement de la seconde lampe qui a été occulté ou seulement une portion fortement atténuée de ce dernier.

3. Procédé selon la revendication 2, **caractérisé en ce qu'**on occulte au moins une partie du rayonnement de la susdite seconde lampe (1B) émis approximativement en direction de ladite zone (5) devant ne pas être chauffée de façon privilégiée.

4. Procédé selon la revendication 2 ou 3, **caractérisé en ce qu'**on atténue fortement ou on occulte au moins la susdite partie du rayonnement parasite de la seconde lampe (1B) à l'aide des moyens (8) avec lesquels on focalise le rayonnement de la première lampe.

5. Procédé selon l'une quelconque des revendications 1 à 4, **caractérisé en ce qu'**on règle la zone d'incidence sur la préforme (3) du rayonnement focalisé (9) en déplaçant les moyens de focalisation (8) devant la lampe de rayonnement (1A) sensiblement parallèlement (10) à la préforme.

6. Procédé selon l'une quelconque des revendications 1 à 5, **caractérisé en ce qu'**on règle l'intensité du rayonnement focalisé (9) parvenant sur la préforme (3) en déplaçant les moyens de focalisation (8) devant la lampe de rayonnement (1A), en les rapprochant ou en les éloignant (11) de celle-ci.

7. Procédé selon l'une quelconque des revendications 1 à 6, **caractérisé en ce qu'**on chauffe de façon privilégiée une partie (A) du corps (2) de la préforme (3) qui est adjacente au col (5) de la préforme et qui est destinée à constituer l'épaule du futur récipient
et **en ce qu'**on protège du chauffage de façon privilégiée le col (5) de la préforme qui est immédiatement adjacent à ladite partie (A) à chauffer de façon privilégiée et en regard duquel n'est disposée aucune lampe de rayonnement.

8. Procédé selon l'une quelconque des revendications 1 à 6, **caractérisé en ce qu'**on chauffe de façon privilégiée le fond (1B) de la préforme.

9. Procédé selon l'une quelconque des revendications 1 à 6, **caractérisé en ce qu'**on chauffe de façon privilégiée une partie quelconque du corps de la préforme.

10. Dispositif de chauffage sélectif d'une préforme (3) destinée à la fabrication d'un récipient, tel qu'une bouteille, en un matériau thermoplastique, notamment en polyéthylène téréphtalate PET, par au moins une étape ultérieure de soufflage ou d'étirage-soufflage de la préforme chaude,
ledit dispositif comportant au moins une lampe de rayonnement (1A) émettant un rayonnement de chauffage en direction de la préforme (3),
**caractérisé en ce qu'**il comporte en outre des moyens focaliseurs optiques (8) interposés entre la lampe (1A) et la préforme (3) et qui sont, d'une part, agencés pour recueillir et focaliser, sur une zone privilégiée (A) de la préforme située en regard de ladite lampe (1A), au moins la plus grande partie (7A) du rayonnement (4) émis par la lampe (1A) en direction de la préforme (3), et, d'autre part, disposés pour réfracter une portion du rayonnement issu d'une seconde lampe, voisine de la lampe précitée (1A), dans le faisceau issu desdits moyens focaliseurs optiques (8), et dirigés vers la zone à chauffer de façon privilégiée.

11. Dispositif selon la revendication 10, comportant une seconde source de rayonnement (1B), **caractérisé en ce que** les moyens focaliseurs (8) sont en outre disposés de manière à au moins atténuer fortement la plus grande partie du rayonnement (7B) en provenance de ladite seconde lampe (1B) dirigée vers une seconde zone (5) de la préforme immédiatement adjacente à la susdite zone (A) à chauffer de façon privilégiée, laquelle seconde zone (5) doit ne pas être chauffée de façon privilégiée.

12. Dispositif selon la revendication 11, **caractérisé en ce que** les moyens focaliseurs (8) sont agencés pour occulter la plus grande partie dudit rayonnement (7B) de la seconde lampe (1B) dirigée vers ladite seconde zone (5) à ne pas chauffer de façon privilégiée.

13. Dispositif selon l'une quelconque des revendications 10 à 12, **caractérisé en ce qu'**il comporte des premiers moyens de déplacement pour déplacer (10) les moyens focaliseurs (8) parallèlement à l'axe des préformes, ce grâce à quoi il est possible d'ajuster sur la préforme la zone d'incidence du rayonnement focalisé.

14. Dispositif selon l'une quelconque des revendications 10 à 13, **caractérisé en ce qu'**il comporte des seconds moyens (11) de déplacement pour déplacer les moyens focaliseurs pour les rapprocher ou les éloigner de ladite lampe de rayonnement, ce grâce à quoi il est possible d'ajuster l'intensité du rayonnement focalisé sur la préforme.

15. Dispositif selon l'une quelconque des revendications 10 à 14, **caractérisé en ce que** les moyens focaliseurs (8) comprennent au moins un élément optique plan-convexe à convexité tournée vers la préforme, l'axe de l'élément plan-convexe étant approximativement aligné avec le centre de la source de rayonnement et le centre de la zone à chauffer de façon privilégiée sur la préforme.

16. Dispositif selon la revendication 15, qui est agencé pour un chauffage des préformes au défilé et dans lequel chaque lampe de rayonnement est en forme de barreau, **caractérisé en ce que** l'élément plan-convexe est un barreau optique plan-convexe ayant sensiblement la même longueur que la lampe de rayonnement.

17. Dispositif selon l'une quelconque des revendications 10 à 16, **caractérisé en ce que** des moyens focaliseurs (8) sont disposés de manière que soit chauffée de façon privilégiée une zone (A) du corps (2) de la préforme (3) située immédiatement au voisinage du col (5) de la préforme et que ne soit pas chauffé de façon privilégiée le col (5) de la préforme.

18. Dispositif selon l'une quelconque des revendications 10 à 16, **caractérisé en ce que** des moyens focaliseurs (12) sont disposés de manière que soit chauffé de façon privilégiée le fond (13) de la préforme (3).

19. Dispositif selon l'une quelconque des revendications 10 à 16, **caractérisé en ce que** des moyens focaliseurs (14) sont disposés de manière que soit chauffée de façon privilégiée une zone souhaitée quelconque du corps de la préforme (3).

## Patentansprüche

1. Verfahren zum selektiven Erwärmen eines Vorformlings (3) für die Herstellung eines Behältnisses wie etwa einer Flasche aus einem thermoplastischen Material mittels zumindest eines später erfolgenden Arbeitsschritts des Blas- oder Blasziehformens des heißen Vorformlings, wobei der Vorformling gemäß dem Verfahren erwärmt wird, indem eine von mindestens einer Lampe abgegebene Heizstrahlung auf ihn gerichtet wird,
**dadurch gekennzeichnet, daß** auf eine bevorzugte Zone (A) des Vorformlings (3) zumindest ein Großteil (7A) der Strahlung (4), die von einer der bevorzugten Zone (A) des Vorformlings im wesentlichen gegenüberliegend angeordneten Lampe (1A) annäherungsweise in Richtung auf den Vorformling (3) hin abgegeben wird, auf optischem Wege mit Hilfe von optischen Fokussiermitteln (8) fokussiert wird,
sowie dadurch, daß mit Hilfe der optischen Fokussiermittel (8) ein Teil der von einer zweiten, zu der genannten Lampe (1A) benachbarten Lampe ausgehenden Strahlung in dem von den optischen Fokussiermitteln (8) ausgehenden Strahl gebrochen und auf die bevorzugt zu erwärmende Zone gerichtet wird,
infolgedessen die bevorzugte Zone (A) den Großteil (7A) der Strahlung (4) empfängt, während die zu der bevorzugten Zone (A) benachbarten Zonen den Anteil der von der Lampe ursprünglich in ihre Richtung ausgegebenen Strahlung nicht empfangen.

2. Verfahren nach Anspruch 1, **dadurch gekennzeichnet, daß** des weiteren mindestens derjenige Teil (7B) der Strahlung zumindest stark abgeschwächt wird, der von einer zweiten, zu der genannten Lampe (1A) benachbarten Lampe (1B) in Richtung auf eine vor dem bevorzugten Erwärmen zu bewahrende Zone (5) hin ausgegeben wird, die an die bevorzugt zu erwärmende Zone (A) angrenzt und sich in Bezug auf diese entgegengesetzt zu der zweiten Lampe (1B) befindet,
infolgedessen die bevorzugt zu erwärmende Zone (A) die von der ersten Lampe (1A) stammende fokussierte Strahlung sowie einen Anteil (7B) der von der zweiten Lampe (1B) stammenden Strahlung empfängt,
während die vor der bevorzugten Erwärmung zu bewahrende Zone (5) weder die auf die bevorzugt zu erwärmende Zone fokussierte Strahlung der ersten Lampe noch die Strahlung der zweiten Lampe, die ausgeblendet wurde, bzw. von dieser nur einen stark abgeschwächten Teil empfängt.

3. Verfahren nach Anspruch 2, **dadurch gekennzeichnet, daß** mindestens ein Teil der Strahlung der zweiten Lampe (1B), die annäherungsweise in Richtung auf die nicht bevorzugt zu erwärmende Zone (5) abgegeben wird, ausgeblendet wird.

4. Verfahren nach Anspruch 2 oder 3, **dadurch gekennzeichnet, daß** mindestens der genannte Teil der unerwünschten Strahlung der zweiten Lampe (1B) mit Hilfe der Einrichtungen (8), mit denen die Strahlung der ersten Lampe fokussiert wird, stark abgeschwächt oder ausgeblendet wird.

5. Verfahren nach einem der Ansprüche 1 bis 4, **dadurch gekennzeichnet, daß** die Auftreffzone der fokussierten Strahlung (9) auf dem Vorformling (3) reguliert wird, indem die Fokussiermittel (8) vor der Strahlungslampe (1A) im wesentlichen parallel (10) zum Vorformling verschoben werden.

6. Verfahren nach einem der Ansprüche 1 bis 5, **dadurch gekennzeichnet, daß** die Intensität der den Vorformling (3) erreichenden fokussierten Strahlung (9) reguliert wird, indem die Fokussiermittel (8) vor der Strahlungslampe (1A) so verschoben werden, daß sie an diese angenähert oder von ihr entfernt (11) werden.

7. Verfahren nach einem der Ansprüche 1 bis 6, **dadurch gekennzeichnet, daß** ein Teil (A) des Körpers (2) des Vorformlings (3), der an den Hals (5) des Vorformlings angrenzt und dazu bestimmt ist, die Schulter des späteren Behältnisses zu bilden, bevorzugt erwärmt wird,
sowie dadurch, daß der Hals (5) des Vorformlings, der unmittelbar an den bevorzugt zu erwärmenden Teil (A) angrenzt und dem gegenüber keine Strahlungslampe angeordnet ist, gegen das bevorzugte Erwärmen geschützt wird.

8. Verfahren nach einem der Ansprüche 1 bis 6, **dadurch gekennzeichnet, daß** der Boden (1B) des Vorformlings bevorzugt erwärmt wird.

9. Verfahren nach einem der Ansprüche 1 bis 6, **dadurch gekennzeichnet, daß** ein beliebiger Teil des Körpers des Vorformlings bevorzugt erwärmt wird.

10. Vorrichtung zum selektiven Erwärmen eines Vorformlings (3) für die Herstellung eines Behältnisses wie etwa einer Flasche aus einem thermoplastischen Material, insbesondere aus Polyethylenterephthalat PET, mittels zumindest eines später erfolgenden Arbeitsschritts des Blas- oder Blasziehformens des heißen Vorformlings,
wobei die Vorrichtung zumindest eine Strahlungslampe (1A) aufweist, die eine Heizstrahlung in Richtung auf den Vorformling (3) hin abgibt,
**dadurch gekennzeichnet, daß** sie des weiteren zwischen der Lampe (1A) und dem Vorformling (3) angeordnete optische Fokussiermittel (8) aufweist, die einerseits dazu konzipiert sind, zumindest den Großteil (7A) der von der Lampe (1A) abgegebenen Strahlung (4) aufzufangen und auf eine der Lampe (1A) gegenüberliegende, bevorzugte Zone (A) des Vorformlings in Richtung auf den Vorformling (3) hin zu fokussieren, und andererseits so angeordnet sind, daß sie einen Teil der von einer zweiten, zu der genannten Lampe (1A) benachbarten Lampe ausgehenden Strahlung in dem von den optischen Fokussiermitteln (8) ausgehenden Strahl brechen, und die auf die bevorzugt zu erwärmende Zone gerichtet sind.

11. Vorrichtung nach Anspruch 10 mit einer zweiten Strahlungsquelle (1B), **dadurch gekennzeichnet, daß** die Fokussiermittel (8) des weiteren derart angeordnet sind, daß sie den Großteil der Strahlung (7B), die von der zweiten Lampe (1B) stammt, welche auf eine zweite, zu der bevorzugt zu erwärmenden Zone (A) unmittelbar benachbarte und nicht bevorzugt zu erwärmende Zone (5) des Vorformlings gerichtet ist, zumindest stark abschwächen.

12. Vorrichtung nach Anspruch 11, **dadurch gekennzeichnet, daß** die Fokussiermittel (8) dazu konzipiert sind, den Großteil der auf die zweite, nicht bevorzugt zu erwärmende Zone (5) gerichteten Strahlung (7B) der zweiten Lampe (1B) auszublenden.

13. Vorrichtung nach einem der Ansprüche 10 bis 12, **dadurch gekennzeichnet, daß** sie erste Verschiebungseinrichtungen zum Verschieben (10) der Fokussiermittel (8) parallel zur Achse der Vorformlinge aufweist, infolgedessen es möglich ist, die Auftreffzone der fokussierten Strahlung auf dem Vorformling einzustellen.

14. Vorrichtung nach einem der Ansprüche 10 bis 13, **dadurch gekennzeichnet, daß** sie zweite Verschiebungseinrichtungen (11) zum Verschieben der Fokussiermittel aufweist, um sie an die Strahlungslampe anzunähern oder von dieser zu entfernen, infolgedessen es möglich ist, die Intensität der auf den Vorformling fokussierten Strahlung einzustellen.

15. Vorrichtung nach einem der Ansprüche 10 bis 14, **dadurch gekennzeichnet, daß** die Fokussiermittel (8) mindestens ein plankonvexes optisches Element mit einer dem Vorformling zugewendeten Konvexität aufweisen, wobei die Achse des plankonvexen Elements annäherungsweise mit der Mitte der Strahlungsquelle und der Mitte der bevorzugt zu erwärmenden Zone auf dem Vorformling zusammenfällt.

16. Vorrichtung nach Anspruch 15, die für ein Erwärmen der Vorformlinge im Vorbeilauf konzipiert ist, und bei der jede Strahlungslampe eine Stabform aufweist, **dadurch gekennzeichnet, daß** das plankonvexe Element ein plankonvexer optischer Stab ist, der im wesentlichen die gleiche Länge wie die Strahlungslampe besitzt.

17. Vorrichtung nach einem der Ansprüche 10 bis 16, **dadurch gekennzeichnet, daß** Fokussiermittel (8) derart angeordnet sind, daß eine unmittelbar benachbart zum Hals (5) des Vorformlings befindliche Zone (A) des Körpers (2) des Vorformlings (3) bevorzugt erwärmt wird, und der Hals (5) des Vorformlings nicht bevorzugt erwärmt wird.

18. Vorrichtung nach einem der Ansprüche 10 bis 16, **dadurch gekennzeichnet, daß** Fokussiermittel (12) derart angeordnet sind, daß der Boden (13) des Vorformlings (3) bevorzugt erwärmt wird.

19. Vorrichtung nach einem der Ansprüche 10 bis 16, **dadurch gekennzeichnet, daß** Fokussiermittel (14) derart angeordnet sind, daß eine beliebige gewünschte Zone des Körpers des Vorformlings (3) bevorzugt erwärmt wird.

## Claims

1. Method for selectively heating a preform (3) intended for the manufacture of a container, such as a bottle, made of a thermoplastic material, by at least one subsequent step of blow molding or of stretch-blow molding of the hot preform, in which heating the preform is heated by directing thereto a heating radiation emitted by at least one lamp,
**characterized in that** at least the greater part (7A) of the radiation (4) emitted, approximately in the direction of the preform (3), by a lamp (1A) lying substantially opposite a preferential area (A) of the preform (3) is optically focused with optical focusing means (8) onto said preferential area (A) of the preform,
and **in that** a part of the radiation from a second lamp, neighbouring the aforementioned lamp (1A), is refracted with said optical focusing means (8) in the beam from said optical focusing means (8) and directed onto the area to be preferentially heated,
whereby said preferential area (A) receives the greater part (7A) of the radiation (4) whereas the areas neighbouring said preferential area (A) do not receive the fraction of the radiation initially emitted by the lamp in their direction.

2. Method according to claim 1, **characterized in that** furthermore at least that part (7B) of the radiation emitted by a second lamp (1B) neighbouring the aforementioned lamp (1A) in the direction of an area (5) to be preserved from heating in a preferential manner, which is adjacent to the area (A) to be heated preferentially and which lies, with respect to the latter, opposite said second lamp (1B), is at least highly attenuated,
whereby the area (A) to be heated preferentially receives the focused radiation coming from the first lamp (1A) and a fraction (7B) of the radiation coming from the second lamp (1B),
whereas said area (5) to be preserved from heating in a preferential manner receives neither the radiation from the first lamp, which has been focused onto said area to be heated preferentially, nor the radiation from the second lamp which has been occulted, or only a highly attenuated portion of the latter radiation.

3. Method according to claim 2, **characterized in that** at least part of the radiation from said second lamp (1B) emitted approximately in the direction of said area (5) which must not be preferentially heated is occulted.

4. Method according to claim 2 or 3, **characterized in that** at least said part of the stray radiation from the second lamp (1B) is highly attenuated or is occulted with the means (8) with which the radiation from the first lamp is focused.

5. Method according to any one of claims 1 to 4, **characterized in that** the area of incidence of the focused radiation (9) on the preform (3) is set by moving the focusing means (8) in front of the radiation lamp (1A) substantially parallel (10) to the preform.

6. Method according to any one of claims 1 to 5, **characterized in that** the intensity of the focused radiation (9) reaching the preform (3) is set by moving the focusing means (8) in front of the radiation lamp (1A) by bringing them closer to or further from (11) the latter.

7. Method according to any one of claims 1 to 6, **characterized in that** a part (A) of the body (2) of the preform (3), which is adjacent to the neck (5) of the preform and which is intended to form the shoulder of the future container, is heated preferentially
and **in that** the neck (5) of the preform, which is immediately adjacent to said part (A) to be heated preferentially and opposite which no radiation lamp is placed, is protected from the heating in a preferential manner.

8. Method according to any one of claims 1 to 6, **characterized in that** the bottom (1B) of the preform is heated preferentially.

9. Method according to any one of claims 1 to 6, **characterized in that** any part of the body of the preform is heated preferentially.

10. Device for selectively heating a preform (3) intended for the manufacture of a container, such as a bottle, made of a thermoplastic material, in particular polyethylene terephthalate PET, by at least one subsequent step of blow molding or of stretch-blow molding of the hot preform,
said device including at least one radiation lamp (1A) emitting heating radiation in the direction of the preform (3),
**characterized in that** it furthermore includes optical focusing means (8) interposed between the lamp (1A) and the preform (3) and which are, on one hand, designed to receive and focus, onto a preferential area (A) of the preform lying opposite said lamp (1A), at least the greater part (7A) of the radiation (4) emitted by the lamp (1A) in the direction of the preform (3) and, on the other hand, disposed so as to refract a part of the radiation from a second lamp, neighbouring the aforementioned lamp (1A), in the beam from said optical focusing means (8) and directed onto the area to be preferentially heated.

11. Device according to claim 10, including a second radiation source (1B), **characterized in that** the focusing means (8) are furthermore placed so as at least highly to attenuate the greater part of the radiation (7B) coming from said second lamp (1B) directed toward a second area (5) of the preform immediately adjacent to said area (A) to be heated preferentially, which second area (5) must not be heated preferentially.

12. Device according to claim 11, **characterized in that** the focusing means (8) are designed to occult the greater part of said radiation (7B) from the second lamp (1B) directed toward said second area (5) which is not to be heated preferentially.

13. Device according to any one of claims 10 to 12, **characterized in that** it includes first movement means for moving (10) the focusing means (8) parallel to the axis of the preforms, whereby it is possible to adjust, on the preform, the area of incidence of the focused radiation.

14. Device according to any one of claims 10 to 13, **characterized in that** it includes second movement means (11) for moving the focusing means in order to bring them closer to or further from said radiation lamp, whereby it is possible to adjust the intensity of the radiation focused onto the preform.

15. Device according to any one of claims 10 to 14, **characterized in that** the focusing means (8) comprise at least one plano-convex optical element having its convexity turned toward the preform, the axis of the plano-convex element being approximately aligned with the center of the radiation source and the center of that area on the preform which is to be heated preferentially.

16. Device according to claim 15, which is designed for heating preforms on the run and in which each radiation lamp is in the form of a strip, **characterized in that** the plano-convex element is a plano-convex optical strip having approximately the same length as the radiation lamp.

17. Device according to any one of claims 10 to 16, **characterized in that** the focusing means (8) are placed so that an area (A) of the body (2) of the preform (3) lying immediately adjacent to the neck (5) of the preform is heated preferentially and so that the neck (5) of the preform is not heated preferentially.

18. Device according to any one of claims 10 to 16, **characterized in that** focusing means (12) are placed so that the bottom (13) of the preform (3) is heated preferentially.

19. Device according to any one of claims 10 to 16, **characterized in that** the focusing means (14) are placed so that any desired area of the body of the preform (3) is heated preferentially.
